# EUROPEAN PATENT SPECIFICATION

(11) **EP 2 839 998 B1**
(45) Date of publication and mention of the grant of the patent: **12.07.2017**
(21) Application number: 14168625.3
(22) Date of filing: 16.05.2014
(51) Int. Cl.: B60S 1/08, B60S 1/16

(54) **Electric wiper driver and output gear assembly thereof**
Elektrischer Wischerantrieb und Ausgangszahnradanordnung dafür
Commande d'essuie-glace électrique et son ensemble d'engrenages de sortie

(30) Priority: 20.08.2013 CN 201320509241 U
(43) Date of publication of application: 25.02.2015
(73) Proprietor: Bosch Automotive Products (Changsha) Co., Ltd, Changsha, Hunan 410100 (CN)
(72) Inventor: Jia, Xinpo, 410100 Changsha Hunan (CN); Koesters, Matthias, 410100 Changsha Hunan (CN); Yang, Sulin, 410100 Changsha Hunan (CN)
(74) Representative: Bee, Joachim

(56) References cited:
- EP-A2- 1 736 385
- KR-A- 20010 078 413
- US-A- 5 023 530
- US-A- 5 422 449

## Description

### Technical Field

The disclosure relates to an electric wiper driver and an output gear assembly of the electric wiper driver, the output gear assembly having snow clutch functionality.

### Background Art

An electric wiper driver of a wiper system for a windshield of a vehicle is generally integrated with a speed reduction mechanism for converting the high speed and low torque output of an electric motor into a low speed and high torque output which is used to drive a wiper driving mechanism. The speed reduction mechanism is generally of gear type, comprising at least an input gear, for example, a worm, and an output gear, for example, a worm gear. The output gear may mesh with the input gear directly, or indirectly via one or more intermediate gears when necessary.

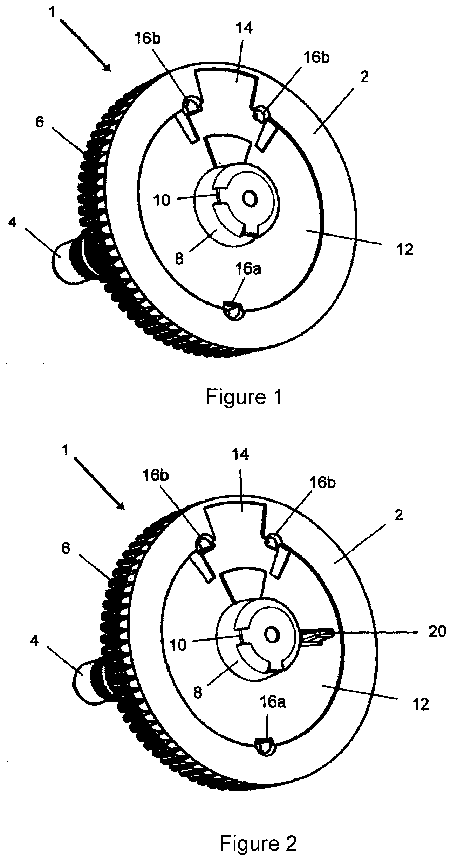

A typical output gear is shown in Figure 1, which comprises a gear body 2 and an output shaft 4 extending along the central axis of the gear body 2 from a first side of the gear body 2. The gear body 2 is formed of a plastic material by injection molding and has teeth 6 along its outer periphery for meshing with corresponding teeth of an upstream gear. The output shaft 4 may be of the same material as the gear body 2, or formed by a different material, such as a metal, and integrated with the gear body 2 by insert molding. The gear body 2 comprises, on its second opposite side, a central engagement protrusion 8 with alignment structures 10, a circular recess 12, having a radially outwardly offset section 14, recessed from the second side surface for receiving a conductive contact plate (not shown) of a parking system of the wiper system, and fixing sockets 16a and 16b for receiving fixing hooks of the contact plate to fixedly attach the contact plate to the output gear.

The parking system of the wiper system is known in the art for moving the wiper blades back to their parking or home positions after a wiping operation of the wiper system is ended. The contact plate has the same shape as the circular recess 12 having the offset section 14.

An electric wiper driver for the front windshield of the vehicle, depending on the electric circuit layout, may require a so called snow clutch. This is a mechanical switch that can avoid damages of wipers caused by chattering when they are being returned to their parking positions in the condition that there is snow on the windshield by decoupling the electric motor from the wipers.

The snow clutch usually requires a pin 20, as shown in Figure 2, on the output gear in order to activate the switch. This pin 20 is integrated with the gear body 2 of the output gear by injection molding.

It can be seen that, for manufacturing the output gears of the configuration shown in Figure 1 without a snow clutch pin and the configuration shown in Figure 2 having a snow clutch pin, different molds are needed, which increases the manufacturing cost of wiper systems.

From document EP 1 736 385 A2, a drive for a wiper system of a vehicle is known, comprising an output gear which forms an output end of a speed reduction mechanism of the wiper drive.

### Summary

An object of the disclosure is to provide an improved electric wiper driver and an output gear thereof for overcoming the defects existed in the prior art as described above.

For this end, according to an aspect of the disclosure, an output gear assembly for an electric wiper drive is provided, as recited in claim 1. The electric wiper drive comprises: an output gear which forms an output end of a speed reduction mechanism of the electric wiper driver; and a pin subassembly which is formed separately from the output gear and then assembled to the output gear by a fixing structure, wherein the pin subassembly comprises a base portion and a snow clutch pin formed integrally on the base portion.

According to a preferred embodiment of the disclosure, the fixing structure comprises at least one fixing socket formed in one of the output gear and the pin subassembly and at least one fixing leg formed on the other of the output gear and the pin subassembly and inserted into and fixed in the fixing socket.

According to a preferred embodiment of the disclosure, the at least one fixing socket comprises at least two circumferentially spaced fixing sockets, and the at least one fixing leg comprises at least two circumferentially spaced fixing legs inserted into and fixed in corresponding fixing sockets respectively.

According to a preferred embodiment of the disclosure, the base portion is in the form of a base plate, the snow clutch pin extending away from a front surface of the base plate.

According to a preferred embodiment of the disclosure, the base plate is fan-shaped, defined by concentric inner and outer curved edges and opposed side edges extending between the inner and outer curved edges.

According to a preferred embodiment of the disclosure, the output gear comprises a gear body, an output shaft extending along the central axis of the gear body from a first side of the gear body, and an engagement protrusion extending along the central axis of the gear body from a second opposite side of the gear body; and the base plate is attached to the gear body in an area defined on the second side of the gear body between outer peripheries of the engagement protrusion and the gear body.

According to a preferred embodiment of the disclosure, the inner curved edge of the base plate is biased against the outer periphery of the engagement protrusion.

According to a preferred embodiment of the disclosure, the gear body is formed with a recess on its second side, and the base plate is formed with a raised portion which is fitted within the recess for locating the base plate relative to the gear body.

According to a preferred embodiment of the disclosure, the recess comprises a circular recess segment around the engagement protrusion and a radially outwardly offset section continued with the circular recess segment; and the raised portion comprises raised portions fitted within the circular recess segment and the offset section respectively.

According to another aspect of the disclosure, there provides an electric wiper driver comprising an electric motor, and an output gear assembly described above for outputting the motion of the electric motor.

According to the disclosure, a separate pin subassembly is assembled to the output gear to form an output gear assembly having snow clutch functionality. In this way, molds for forming output gears can be reduced and the manufacturing cost of wiper systems can be lowered.

### Brief Description of the Drawings

Figure 1 is a schematic perspective view of an output gear for an electric wiper driver, without a snow clutch pin, according to prior art;
Figure 2 is a schematic perspective view of another output gear for an electric wiper driver, having a snow clutch pin, according to prior art;
Figure 3 is a schematic perspective view of a pin subassembly according to a preferred embodiment of the disclosure, which can be assembled to the output gear shown in Figure 1; and
Figure 4 is a schematic perspective view of an output gear assembly having snow clutch functionality according to the disclosure, which is formed by assembling the pin subassembly shown in Figure 3 to the output gear shown in Figure 1.

### Detailed Description of Preferred Embodiments

Now some preferred embodiments of the disclosure will be described with reference to the drawings.

First, it is noted that the subject of the disclosure is an output gear assembly for an electric wiper driver of a wiper system of a vehicle, having similar snow clutch functionality as the output gear shown in Figure 2 but with different structures. According to a basic concept of the disclosure, the snow clutch pin is formed separately from the output gear, in the form of a pin subassembly, and is then assembled to the output gear.

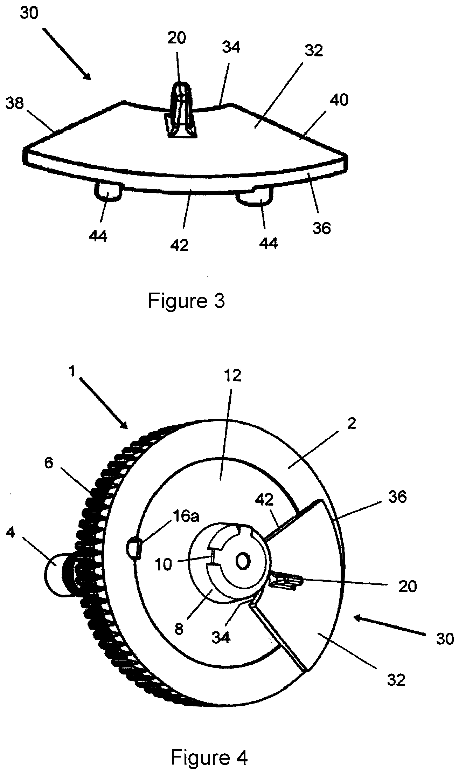

Figure 3 shows a feasible structure of a pin subassembly 30 which can be assembled to the output gear shown in Figure 1 to form an output gear assembly 1 as shown in Figure 4 having snow clutch functionality.

As can be seen from Figure 1, there are three fixing sockets for receiving fixing hooks of the contact plate, wherein first and second fixing sockets 16b are arranged on opposite circumferential sides of the offset section 14 and a third fixing socket 16a is substantially radially opposite to the first and second ones. The first and second fixing sockets 16b can be used for assembling the pin subassembly 30 as described later.

As shown in Figure 3, the pin subassembly 30 is a unitary piece formed of a plastic material by injection molding and comprises a base portion which is illustrated as a base plate 32, a snow clutch pin 20 protruded substantially perpendicularly from a front surface (a surface facing away the gear body 2 of the output gear in the assembled state of the output gear assembly) of the base plate 32, and a pair of fixing legs 44 extending substantially perpendicularly from a back surface (a surface facing towards the gear body 2 in the assembled state of the output gear assembly) of the base plate 32.

In the illustrated embodiment, the base plate 32 is fan-shaped, defined by substantially concentric inner and outer curved edges 34 and 36, and opposed side edges 38 and 40 extending between the inner and outer curved edges 34 and 36 in substantially radial directions. It is appreciated that the base plate 32 may have other shapes than that illustrated here.

The snow clutch pin 20 is formed integrally on the front surface of the base plate 32 at a location which is substantially central in the circumferential direction between the side edges 38 and 40 and is closer to the inner curved edge 34 in the radial direction than to the outer curved edge 36.

The fixing legs 44 are formed integrally on the back surface of the base plate 32. The positions, shapes and sizes of the two fixing legs 44 are determined so that they can be inserted into and fixed in the first and second fixing sockets 16b respectively. For example, the fixing legs 44 may be elastic hooks that can be clamped into recesses formed in the fixing sockets 16b to form snap-fit therebetween. Alternatively, the fixing legs 44 may be fixed in the fixing sockets 16b by press fit, hot stamping, ultrasonic welding or other ways. For the sake of repairing or exchanging the pin subassembly 3 or the output gear, the pin subassembly 3 is preferably detachably assembled to the output gear.

For increasing the locating precision of the pin subassembly 30 on the gear body 2, a locating structure may be formed on the pin subassembly 30, for example, one or more raised portions 42 on the back surface of the base plate 32, which can be fitted within the circular recess 12 and/or within the offset section 14 to locate the pin subassembly 30 precisely with respect to the gear body 2. Figure 3 shows the raised portion 42 which can be fitted within the offset section 14, and Figure 4 shows the raised portion 42 which is fitted within the circular recess 12.

By inserting and fixing the fixing legs 44 in the fixing sockets 16b, with the back surface of the base plate 32 biasing against the second side of the gear body 2 and preferably the inner curved edge 34 abutting against the outer periphery of the engagement protrusion 8, the pin subassembly 30 is assembled to the output gear to form an output gear assembly 1 as shown in Figure 4.

The radius of the inner and outer curved edges 34 and 36 and the radial dimension of the base plate 32 measured between the inner and outer curved edges 34 and 36 are determined so that the base plate 32 is arranged in an area defined on the second side surface of the gear body 2 between the outer peripheries of the engagement protrusion 8 and the gear body 2. The circumferential extend of the base plate 32 or the angle between the side edges 38 and 40 is determined so that the base plate 32 can provide sufficient support to the snow clutch pin 20.

It is appreciated that the shape of the base portion is not limited to the base plate 32 as described above. Rather, the base portion may be designed to have any suitable shape so long as it can be attached to the gear body 2 and provides sufficient support, in particular support in the circumferential direction, to the snow clutch pin 20.

It is appreciated that a pair of circumferentially spaced fixing legs 44 are advantageous for fixing the base plate 32 to the gear body 2 and providing circumferential support to the snow clutch pin 20. However, the number of the fixing leg(s) 44 is not limited to two; rather, one, three or more fixing legs 44 may be adopted in accordance with real need. Also, other type of fixing structures for fixing the base plate 32 to the gear body 2 can be used instead of the fixing legs 44 and the fixing sockets 16b.

It is appreciated that the fixing sockets are formed in the output gear and the fixing legs are formed on the pin subassembly in the above described embodiments, but it is also possible to form the fixing sockets in the pin subassembly and form the fixing legs on the output gear.

As to the snow clutch pin 20, which is configured for cooperating with another component (not shown) of the parking system, has correspondingly designed location

As to the snow clutch pin 20, which is configured for cooperating with another component (not shown) of the parking system, has correspondingly designed location and dimensions for this function.

By using a separate pin subassembly 30 which is to be assembled to the output gear, only one type of mold for forming the output gear is needed.

Further, output gears produced using the same mold may be selectively assembled with a contact plate or a pin subassembly 30. Specifically, in a parking system of a wiper system where no snow clutch is equipped, the output gear is assembled with a contact plate without a pin subassembly 30. On the other hand, in a parking system of a wiper system where a snow clutch is equipped, the output gear is assembled with a pin subassembly 30 without a contact plate. Meanwhile, the same type of pin subassembly 30 can be assembled to various output gears having different dimensions for different electric wiper drives.

In this way, the variance of molds for forming the output gears can be reduced and the manufacturing cost of wiper systems is lowered. A single mold can be used for forming the pin subassembly, but it is much simpler than that for the output gears. Meanwhile, design flexibility is increased and product development time is shortened.

## Claims

1. An output gear assembly (1) for an electric wiper driver, comprising:
an output gear which forms an output end of a speed reduction mechanism of the electric wiper driver;
**characterized in that** said output gear assembly (1) comprises a pin subassembly (30) which is formed separately from the output gear and then assembled to the output gear by a fixing structure, wherein the pin subassembly (30) comprises a base portion (32) and a snow clutch pin (20) formed integrally on the base portion (32),
wherein the snow clutch pin (20) is adapted to activate a snow clutch.

2. The output gear assembly (1) of claim 1, wherein the fixing structure comprises at least one fixing socket (16a, 16b) formed in one of the output gear and the pin subassembly (30) and at least one fixing leg (44) formed on the other of the output gear and the pin subassembly (30) and inserted into and fixed in the fixing socket (16a, 16b).

3. The output gear assembly (1) of claim 2, wherein the at least one fixing socket (16a, 16b) comprises at least two circumferentially spaced fixing sockets (16b), and the at least one fixing leg (44) comprises at least two circumferentially spaced fixing legs (44) inserted into and fixed in corresponding fixing sockets (16b) respectively.

4. The output gear assembly (1) of claim 3, wherein the base portion (32) is in the form of a base plate (32), the snow clutch pin (20) extending away from a front surface of the base plate (32).

5. The output gear assembly (1) of claim 4, wherein the base plate (32) is fan-shaped, defined by concentric inner and outer curved edges (34, 36) and opposed side edges (38, 40) extending between the inner and outer curved edges (34, 36).

6. The output gear assembly (1) of claim 5, wherein the output gear comprises a gear body (2), an output shaft (4) extending along the central axis of the gear body (2) from a first side of the gear body (2), and an engagement protrusion (8) extending along the central axis of the gear body (2) from a second opposite side of the gear body (2); and wherein the base plate (32) is attached to the gear body (2) in an area defined on the second side of the gear body (2) between outer peripheries of the engagement protrusion (8) and the gear body (2).

7. The output gear assembly (1) of claim 6, wherein the inner curved edge (34) of the base plate (32) is biased against the outer periphery of the engagement protrusion (8).

8. The output gear assembly (1) of claim 6, wherein the gear body (2) is formed with a recess (12) on its second side, and the base plate (32) is formed with a raised portion (42) which is fitted within the recess (12) for locating the base plate (32) relative to the gear body (2).

9. The output gear assembly (1) of claim 8, wherein the recess (12) comprises a circular recess segment (12) around the engagement protrusion (8) and a radially outwardly offset section (14) continued with the circular recess segment (12); and wherein the raised portion (42) comprises raised portions (42) fitted within the circular recess segment (12) and the offset section (14) respectively.

10. An electric wiper driver, comprising:
an electric motor; and
an output gear assembly (1) of any one of claims 1 to 9 for outputting the motion of the electric motor.

## Patentansprüche

1. Ausgangszahnradanordnung (1) für einen elektrischen Wischerantrieb, umfassend:
ein Ausgangszahnrad, das ein Ausgangsende eines Geschwindigkeitsverminderungsmechanismus des elektrischen Wischerantriebs bildet,
**dadurch gekennzeichnet, dass** die Ausgangszahnradanordnung (1) eine Stiftunteranordnung (30) umfasst, die getrennt von dem Ausgangszahnrad ausgebildet und anschließend durch eine Befestigungsstruktur zu dem Ausgangszahnrad zusammengebaut wird, wobei die Stiftunteranordnung (30) einen Basisteil (32) und einen Schneekupplungsstift (20) umfasst, der einstückig auf dem Basisteil (32) ausgebildet ist,
wobei der Schneekupplungsstift (20) geeignet ist, eine Schneekupplung zu aktivieren.

2. Ausgangszahnradanordnung (1) nach Anspruch 1, wobei die Befestigungsstruktur wenigstens eine Befestigungsbuchse (16a, 16b), die in einem von dem Ausgangszahnrad und der Stiftunteranordnung (30) ausgebildet ist, und wenigstens einen Befestigungsfuß (44) umfasst, der in dem anderen von dem Ausgangszahnrad und der Stiftunteranordnung (30) ausgebildet und in die Befestigungsbuchse (16a, 16b) eingesetzt und in derselben befestigt ist.

3. Ausgangszahnradanordnung (1) nach Anspruch 2, wobei die wenigstens eine Befestigungsbuchse (16a, 16b) wenigstens zwei in Umfangsrichtung beabstandete Befestigungsbuchsen (16b) umfasst und der wenigstens eine Befestigungsfuß (44) wenigstens zwei in Umfangsrichtung beabstandete Befestigungsfüße (44) umfasst, die jeweils in die entsprechenden Befestigungsbuchsen (16b) eingesetzt und in denselben befestigt sind.

4. Ausgangszahnradanordnung (1) nach Anspruch 3, wobei der Basisteil (32) die Form einer Grundplatte (32) aufweist, wobei sich der Schneekupplungsstift (20) weg von einer Vorderfläche der Grundplatte (32) erstreckt.

5. Ausgangszahnradanordnung (1) nach Anspruch 4, wobei die Grundplatte (32) die Form eines Fächers aufweist und durch konzentrische innere und äußere gekrümmte Ränder (34, 36) definiert ist und sich gegenüberliegende Seitenränder (38, 40) zwischen den inneren und äußeren gekrümmten Rändern (34, 36) erstrecken.

6. Ausgangszahnradanordnung (1) nach Anspruch 5, wobei das Ausgangszahnrad einen Zahnradkörper (2), eine Abtriebswelle (4), die sich entlang der Mittelachse des Zahnradkörpers (2) von einer ersten Seite des Zahnradkörpers (2) erstreckt, und einen Eingriffsvorsprung (8), der sich entlang der Mittelachse des Zahnradkörpers (2) von einer zweiten gegenüberliegenden Seite des Zahnradkörpers (2) erstreckt, umfasst, und wobei die Grundplatte (32) in einem Bereich an dem Zahnradkörper (2) angebracht ist, der auf der zweiten Seite des Zahnradkörpers (2) zwischen Außenumfängen des Eingriffsvorsprungs (8) und des Zahnradkörpers (2) definiert ist.

7. Ausgangszahnradanordnung (1) nach Anspruch 6, wobei der innere gekrümmte Rand (34) der Grundplatte (32) gegen den Außenumfang des Eingriffsvorsprungs (8) vorgespannt ist.

8. Ausgangszahnradanordnung (1) nach Anspruch 6, wobei der Zahnradkörper (2) mit einer Vertiefung (12) auf seiner zweiten Seite ausgebildet ist und die Grundplatte (32) mit einem erhabenen Abschnitt (42) ausgebildet ist, der in die Vertiefung (12) eingepasst ist, um die Grundplatte (32) relativ zu dem Zahnradkörper (2) zu fixieren.

9. Ausgangszahnradanordnung (1) nach Anspruch 8, wobei die Vertiefung (12) ein kreisförmiges Vertiefungssegment (12) um den Eingriffsvorsprung (8) und einen radial nach außen versetzten Abschnitt (14), der sich in das kreisförmige Vertiefungssegment (12) fortsetzt, umfasst, und
wobei der erhabene Abschnitt (42) erhabene Abschnitte (42) umfasst, die in das kreisförmige Vertiefungssegment (12) beziehungsweise den versetzten Abschnitt (14) eingepasst sind.

10. Elektrischer Wischerantrieb, umfassend:
einen Elektromotor und
eine Ausgangszahnradanordnung (1) nach einem der Ansprüche 1 bis 9, um die Bewegung des Elektromotors auszugeben.

## Revendications

1. Ensemble pignon de sortie (1) pour un moteur électrique d'entraînement d'essuie-glace, comprenant un pignon de sortie qui constitue l'extrémité de sortie d'un mécanisme réducteur de vitesse du moteur électrique d'entraînement d'essuie-glace, **caractérisé en ce que** ledit ensemble pignon de sortie (1) comprend un sous-ensemble clavette (30), qui est formé séparément du pignon de sortie et puis assemblé au pignon de sortie par une structure de fixation,
dans lequel le sous-ensemble clavette (30) comprend une partie de base (32) et une clavette d'embrayage (20) pour neige formée d'une seule pièce sur la partie de base (32),
dans lequel la clavette d'embrayage (20) pour neige est apte à activer un embrayage pour neige.

2. Ensemble pignon de sortie (1) selon la revendication 1, dans lequel la structure de fixation comprend au moins une douille de fixation (16a, 16b) formée dans un composant parmi le pignon de sortie et le sous-ensemble clavette (30) et au moins une patte de fixation (44) formée dans l'autre composant parmi le pignon de sortie et le sous-ensemble clavette (30) et introduit et fixé dans la douille de fixation (16a, 16b).

3. Ensemble pignon de sortie (1) selon la revendication 2, dans lequel ladite douille de fixation (16a, 16b) comprend au moins deux douilles de fixation (16b) espacées le long de la circonférence, et ladite patte de fixation (44) comprend au moins deux pattes de fixation (44) espacées le long de la circonférence et fixées chacune dans la douille de fixation (16b) correspondante.

4. Ensemble pignon de sortie (1) selon la revendication 3, dans lequel la partie de base (32) a la forme d'une plaque de base (32), la clavette d'embrayage (20) pour neige s'étendant à partir de la surface avant de la plaque de base (32).

5. Ensemble pignon de sortie (1) selon la revendication 4, dans lequel la plaque de base (32) a la forme d'un éventail, délimité par des bords courbes (34, 36) intérieur et extérieur concentriques et des bords latéraux (38, 40) opposés s'étendant entre les bords courbes (34, 36) intérieur et extérieur.

6. Ensemble pignon de sortie (1) selon la revendication 5, dans lequel le pignon de sortie comprend un corps (2) de pignon, un arbre de sortie (4) s'étendant suivant l'axe central du corps (2) de pignon depuis un premier côté du corps (2) de pignon et une protubérance d'enclenchement (8) s'étendant suivant l'axe central du corps (2) de pignon depuis le second côté du corps (2) de pignon ; et
dans lequel la plaque de base (32) est fixée au corps (2) de pignon dans une zone définie sur le second côté du corps (2) de pignon entre les périphéries extérieures de la protubérance d'enclenchement (8) et du corps (2) de pignon.

7. Ensemble pignon de sortie (1) selon la revendication 6, dans lequel le bord courbe intérieur (34) de la plaque de base (32) est sollicité contre la périphérie extérieure de la protubérance d'enclenchement (8).

8. Ensemble pignon de sortie (1) selon la revendication 6, dans lequel le corps (2) de pignon est formé avec un évidement (12) sur son second côté et la plaque de base (32) est formée avec une partie en relief (42) qui s'installe à l'intérieur de l'évidement (12) pour déterminer la position de la plaque de base (32) par rapport au corps (2) de pignon.

9. Ensemble pignon de sortie (1) selon la revendication 8, dans lequel l'évidement (12) comprend un segment circulaire (12) d'évidement autour de la protubérance d'enclenchement (8) et une section (14) décalée radialement vers l'extérieur en continuité avec le segment circulaire (12) d'évidement ; et
dans lequel la partie en relief (42) comprend des parties en relief (42) qui s'installent respectivement à l'intérieur du segment circulaire (12) d'évidement et de la section (14) décalée.

10. Moteur électrique d'entraînement d'essuie-glace, comprenant :
un moteur électrique ; et
un ensemble pignon de sortie (1) selon l'une quelconque des revendications 1 à 9 pour sortir le mouvement du moteur électrique.
